# FASCICULE DE BREVET EUROPEEN

(11) **EP 1 542 891 B1**
(45) Date de publication et mention de la délivrance du brevet: **19.04.2006**
(21) Numéro de dépôt: 03748003.5
(22) Date de dépôt: 09.09.2003
(51) Int. Cl.: B60T 13/57, B60T 13/575

(54) **SERVOMOTEUR D'ASSISTANCE PNEUMATIQUE AU FREINAGE**
PNEUMATISCHER BREMSKRAFTVERSTÄRKER
PNEUMATIC BRAKE BOOSTER

(30) Priorité: 19.09.2002 FR 0211745
(43) Date de publication de la demande: 22.06.2005
(73) Titulaire: BOSCH SISTEMAS DE FRENADO, S.L., 08080 Barcelona 6 (ES)
(72) Inventeur: SIMON BACARDIT, Juan, E-08013 Barcelone (ES); BERTHOMIEU, Bruno, 08003 Barcelone (ES); SACRISTAN, Fernando, 08348 Barcelone (ES)
(74) Mandataire: Hurwic, Aleksander Wiktor
(86) Numéro de dépôt international: PCT/EP2003/010100
(87) Numéro de publication internationale: WO 2004/026653

(56) Documents cités:
- DE-A- 10 054 252
- DE-A- 19 835 772

## Description

L'invention concerne un servomoteur pneumatique d'assistance au freinage, en particulier pour véhicule automobile.

Les servomoteurs de ce type comprennent, de façon connue, une chambre de dépression et une chambre de travail séparées l'une de l'autre par une membrane étanche portée par une jupe associée à un piston qui est déplaçable axialement dans un sens par une différence de pression entre les deux chambres et dans l'autre sens par un ressort de rappel.

Le piston du servomoteur est monté entre une tige de commande actionnée par une pédale de frein, et une tige de poussée qui entraîne un piston d'un maître cylindre de freinage (en général le piston primaire d'un maître-cylindre tandem).

A son extrémité côté servomoteur, la tige de commande se termine par un plongeur guidé en translation axiale dans un logement du piston. Ce logement débouche sur un disque de réaction en matériau incompressible, par exemple en élastomère ou analogue, qui est interposé entre le piston et la tige de poussée.

Une valve 3 voies est montée dans le piston autour de la tige de commande et comprend un clapet annulaire coopérant avec un siège d'étanchéité formé sur le piston et avec un siège d'étanchéité formé sur le plongeur. Cette valve est actionnée par le déplacement de la tige de commande et commande l'alimentation du servomoteur en air atmosphérique.

Au repos, dans une condition de non-freinage, la chambre de travail du servomoteur est isolée de l'atmosphère extérieure par le clapet de la valve 3 voies et communique avec la chambre de dépression, elle-même reliée à une source de dépression telle que le collecteur d'admission du moteur à combustion interne du véhicule. Quand le conducteur appuie sur la pédale de frein, la tige de commande est déplacée vers le servomoteur et actionne la valve 3 voies dont le clapet ferme la communication entre les deux chambres et ouvre un passage d'alimentation de la chambre de travail en air atmosphérique. Sous l'effet de la différence de pression qui augmente progressivement entre les deux chambres, le piston du servomoteur déplace la tige de poussée vers le maître-cylindre pour rattraper les jeux mécaniques dans le circuit de freinage pendant une phase initiale du freinage appelée phase de saut puis, le conducteur continuant d'appuyer sur la pédale de frein, la pression croît progressivement dans la chambre de travail du servomoteur et la pression de sortie du maître-cylindre augmente linéairement en fonction de l'effort appliqué à la tige de commande jusqu'à une phase de saturation où l'assistance fournie par le servomoteur est maximale et n'augmente plus, la pression dans la chambre de travail étant égale à la pression atmosphérique.

Dans ce fonctionnement, la pression en sortie du maître-cylindre est déterminée à la fois par l'assistance fournie par le servomoteur et par la valeur de cette pression à la fin de la phase de saut, pour un effort déterminé sur la tige de commande.

L'invention a notamment pour but d'augmenter, lors d'un freinage d'urgence, la pression de sortie du maître-cylindre à la fin de phase de saut et cela de façon simple et économique, en utilisant un minimum de pièces supplémentaires et sans augmentation sensible de l'encombrement.

Elle propose à cet effet un servomoteur pneumatique d'assistance au freinage du type précité, et connu, par exemple, du document DE 198 35 772 A, comprenant un piston monté entre une tige de commande et une tige de poussée, la tige de commande se terminant par un plongeur guide en translation dans un logement du piston, et une valve 3 voies montée dans le piston autour de la tige de commande et comprenant un clapet coopérant avec un siège du piston et avec un siège du plongeur pour l'alimentation sélective du servomoteur en air atmosphérique, une douille cylindrique montée axialement coulissante dans ledit logement autour du plongeur, et des moyens sollicitant élastiquement en permanence la douille vers le clapet de la valve 3 voies pour écarter ce clapet de son siège sur le plongeur et augmenter ainsi l'alimentation en air atmosphérique d'une chambre de travail du servomoteur, ce dernier comprenant encore des moyens de blocage axial de la douille dans une position écartée du clapet et des moyens de déblocage de la douille, qui sont sensibles à la vitesse de déplacement de la tige de commande et du plongeur dans le sens du freinage et qui débloquent la douille quand cette vitesse est au moins égale ou supérieure à une valeur prédéterminée.

Dans le servomoteur selon l'invention, le déplacement de la douille, déclenché par un déplacement rapide de la tige de commande, c'est-à-dire lors d'un freinage d'urgence, permet d'allonger la phase de saut et donc d'augmenter la valeur de la pression de sortie du maître-cylindre à la fin de la phase de saut et aussi pendant la suite du freinage, jusqu'à la saturation du servomoteur. Ainsi, la pression de sortie du maître-cylindre lors d'un freinage d'urgence est supérieure, pour un même effort sur la tige de commande, à la pression de sortie du maître-cylindre lors d'un freinage normal. L'efficacité du freinage en est accrue de façon correspondante.

Selon une autre caractéristique de l'invention, les moyens de blocage axial de la douille sont agencés dans ledit logement entre le plongeur et le piston et comprennent un élément élastiquement déformable de retenue de la douille, cet élément étant monté dans une gorge annulaire du logement formé dans le piston.

Une partie de l'élément de retenue s'étend en direction du plongeur et s'appuie sur une rampe ou partie de surface oblique du plongeur, pour être écartée du plongeur et libérer la douille quand le plongeur est déplacé axialement vers la tige de poussée par rapport au piston.

Dans un mode de réalisation préféré de l'invention, l'élément de retenue est formé d'une épingle en fil d'acier à ressort, qui comprend au moins un coude logé dans ladite gorge du logement et au moins un coude logé dans une encoche de la douille.

Ces moyens sont simples, peu coûteux et peu encombrants.

Le servomoteur selon l'invention comprend également des moyens portés par le piston et limitant le déplacement axial de la douille vers le clapet, ces moyens formant également des moyens de limitation de déplacement axial du plongeur par rapport au piston et permettant en outre de ramener la douille dans une position initiale par rapport au piston après un déclenchement lors d'un freinage d'urgence.

De façon particulièrement avantageuse, ces moyens de limitation de déplacement sont formés d'une tige ou d'un cavalier engagé dans des lumières des parois cylindriques du piston et de la douille, ces lumières permettant un déplacement axial limité de la tige ou du cavalier par rapport au piston.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 est une vue schématique en coupe axiale d'un servomoteur pneumatique d'assistance d'un type connu ;
- la figure 2 est une vue partielle, à plus grande échelle, d'un servomoteur selon l'invention ;
- la figure 3 est une vue partielle en coupe selon la ligne III-III de la figure 2 ;
- la figure 4A est une vue schématique en perspective éclatée d'une partie du servomoteur selon l'invention ;
- les figures 4B et 4C sont des vues schématiques partielles en perspective, à plus grande échelle ;
- la figure 5 est un graphe représentant les variations de la pression de sortie d'un maître-cylindre associé à un servomoteur selon l'invention, en fonction de l'effort d'entrée appliqué à la tige de commande du servomoteur ;
- la figure 6 est une vue schématique partielle en coupe d'une variante de réalisation ;
- la figure 7 est un graphe semblable à celui de la figure 5, pour la variante de réalisation de la figure 6 ;
- les figures 8 et 9 sont des vues correspondant aux figures 6 et 7, pour une autre variante de réalisation ;
- la figure 10 est une vue schématique en coupe axiale d'une autre variante de réalisation ;
- les figures 11 et 12 sont des vues partielles agrandies en coupe axiale et la figure 13 est une vue partielle agrandie en coupe transversale de la variante de la figure 10.

Par convention, dans la description qui suit, ce qui est à gauche dans les dessins sera décrit comme étant à l'avant, et ce qui est à droite comme étant à l'arrière.

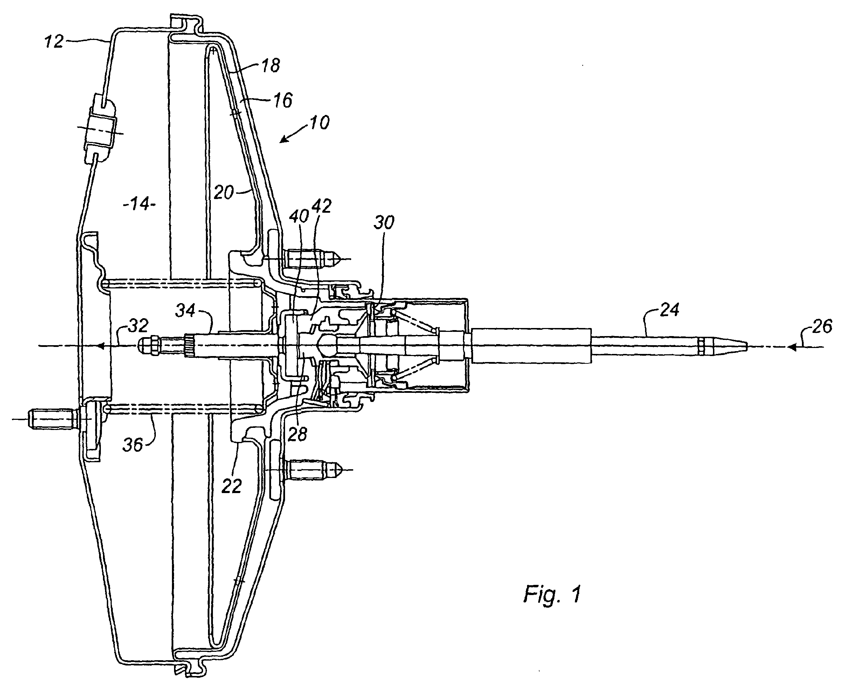

En figure 1, on a représenté schématiquement un servomoteur pneumatique 10 d'assistance au freinage d'un type connu, comprenant une enveloppe 12. délimitant une chambre avant 14 et une chambre arrière 16 qui sont séparées l'une de l'autre par une membrane étanche 18 portée par une jupe rigide 20. Cette jupe comporte un orifice central dans lequel est fixé un piston 22 déplaçable axialement dans le servomoteur 10.

Une tige de commande 24 actionnée par une pédale de frein (non représentée) dans le sens indiqué par la flèche 26, s'étend axialement à l'extrémité arrière du servomoteur et porte à son extrémité avant un plongeur distributeur 28 qui coopère à son extrémité arrière avec un clapet annulaire d'une valve 3 voies 30 montée dans l'extrémité tubulaire arrière du piston 22 autour de la tige de commande 24 pour alimenter sélectivement en air atmosphérique la chambre arrière 16 ou chambre de travail du servomoteur 10, en fonction de l'effort appliqué à la tige de commande 24 par la pédale de frein.

Le piston 22 du servomoteur est destiné à entraîner en translation axiale, dans le sens indiqué par la flèche 32, une tige de poussée 34 qui s'étend entre le piston 22 et un piston primaire d'un maître-cylindre tandem (non représenté) relié à la partie avant du servomoteur 10 et permettant d'alimenter un circuit de freinage en liquide de frein sous pression.

Un ressort de compression 36 est monté à l'intérieur du servomoteur dans la chambre avant 14 ou chambre de dépression autour de la tige de poussée 34 et permet de rappeler le piston 22 dans une position arrière ou position de repos représentée en figure 1.

A son extrémité arrière, la tige de poussée 34 porte une coupelle 38 orientée vers l'arrière et dans laquelle est logé un disque de réaction 40 en matériau sensiblement incompressible, notamment en caoutchouc ou en élastomère, sur lequel vient s'appliquer une partie 42 du piston 22 du servomoteur. La partie avant du distributeur plongeur 28 est guidée en translation dans un passage axial 44 de cette partie 42. du piston 22 et se trouve au voisinage immédiat du disque de rédaction 40, en position de repos.

Lors d'un freinage, l'extrémité avant du plongeur distributeur 28 est en contact avec le disque de réaction 40 pour transmettre à la tige de commande 24 et à la pédale de frein l'effort de réaction qui est engendré dans le circuit de freinage et qui est transmis au disque de réaction 40 par le piston primaire du maître-cylindre et par la tige de poussée 34.

Ce retour d'effort est ressenti par le conducteur et lui permet de moduler l'effort qu'il applique à la tige de commande 24 par l'intermediaire de la pédale de frein, en fonction du freinage à effectuer.

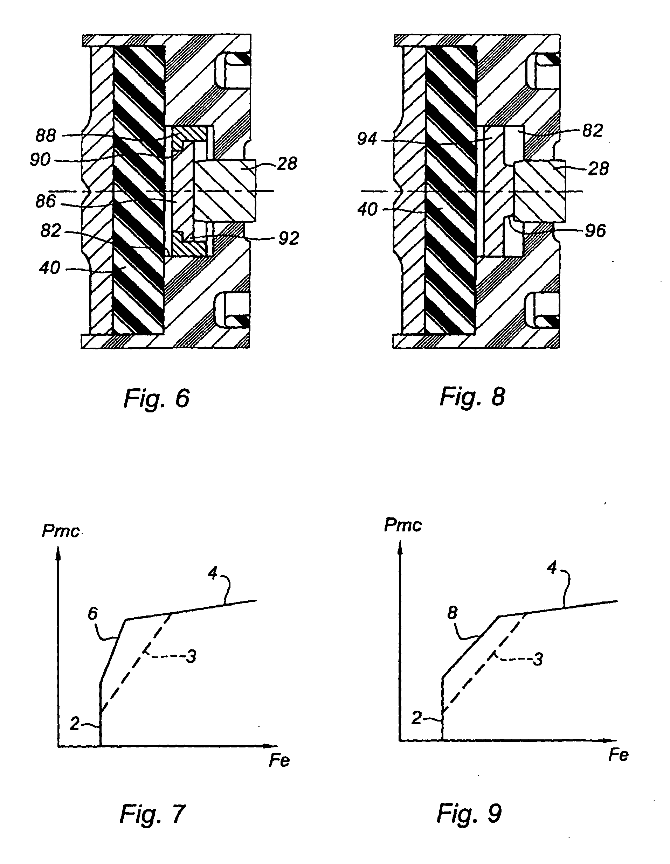

Comme on l'a représenté schématiquement en figure 5, la variation de la pression de sortie Pmc du maître-cylindre en fonction de l'effort d'entrée Fe appliqué à la tige de commande 24 pour le freinage comprend une première phase 1 qui est une course morte, une deuxième phase 2 appelée phase de saut, une troisième phase 3 d'assistance au freinage, et une dernière phase 4 ou phase de saturation.

La deuxième phase 2 correspond au début de l'alimentation de la chambre de travail 16 du servomoteur en air atmosphérique. Plus précisément, lorsque la tige de commande 24 commence à être déplacée vers l'avant par rapport au piston 22 du servomoteur 10, le clapet de la valve 3 voies 30 ferme tout d'abord la communication entre les deux chambres 14 et 16 du servomoteur, puis ouvre un passage d'alimentation de la chambre 16 en air atmosphérique. La différence de pression qui s'établit alors entre les chambres 14 et 16 du servomoteur provoque un déplacement vers l'avant du piston 22 et un rattrapage des courses mortes dans le circuit de freinage, avec une augmentation de la pression du liquide du frein en sortie du maître-cylindre jusqu'à une valeur Pmc1 à la fin de la phase de saut ou phase 2. Ensuite, si l'effort d'entrée Fe appliqué à la tige de commande 24 continue à augmenter, davantage d'air à la pression atmosphérique est admis dans la chambre de travail 16 du servomoteur, pendant la phase 3, jusqu'a ce que la pression dans cette chambre 16 devienne égale à la pression atmosphérique. Le servomoteur 10 est alors en saturation. Si l'effort d'entrée Fe augmente encore, la pression en sortie du maître-cylindre continue à augmenter, mais beaucoup plus faiblement (phase 4).

Il est connu dans la technique que, si l'on allonge la phase de saut ou phase 2, par exemple jusqu'à la pression Pmc2 indiquée en figure 5, la courbe de la pression Pmc pendant la phase suivante 3' ou phase d'assistance est sensiblement parallèle à la courbe pendant la phase d'assistance 3 précédemment décrite. Cela permet d'augmenter globalement l'assistance au freinage, la pression en sortie du maître-cylindre obtenue sur la courbe 3' étant supérieure à celle obtenue sur la courbe 3 pour un même effort d'entrée Fe.

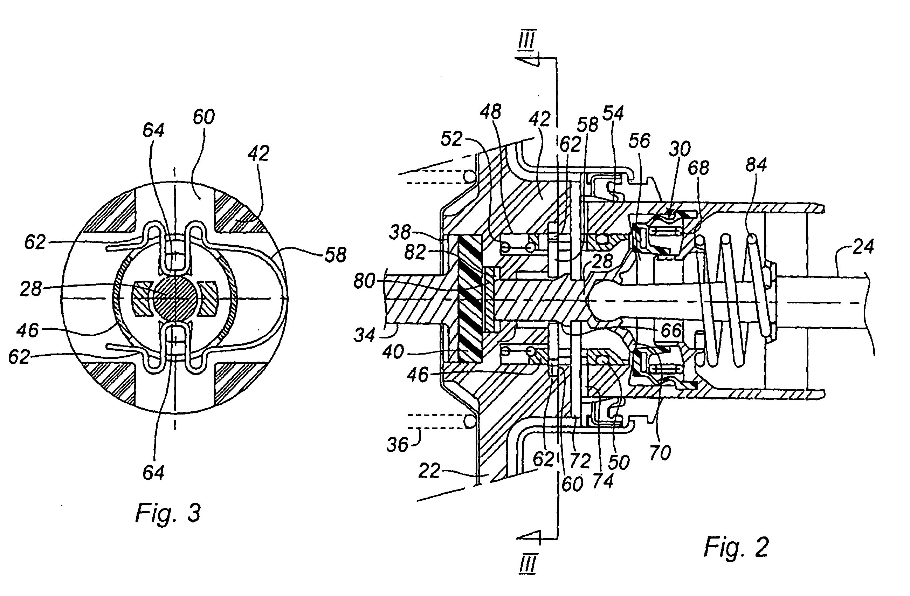

La présente invention prévoit d'allonger la phase de saut lors d'un freinage d'urgence, au moyen du dispositif représenté aux figures 2 à 4 auxquelles on fera maintenant référence.

Dans ces figures, on a désigné les mêmes éléments qu'en figure 1 par les mêmes chiffres de référence.

Selon l'invention, une douille cylindrique 46 est montée axialement coulissante dans un logement 48 formé dans la partie 42 du piston du servomoteur autour du plongeur distributeur 28 monté à l'extrémité de la tige de commande 24, la partie cylindrique arrière de la douille 46 portant un joint d'étanchéité 50 appliqué sur la surface cylindrique interne du logement 48.

Un ressort de compression 52 est monté dans le logement 48 entre l'extrémité avant de celui-ci et la douille 46 pour solliciter cette dernière en permanence vers l'arrière et appliquer son extrémité arrière 54 de façon étanche sur le clapet annulaire 56 de la valve 3 voies 30.

Des moyens de blocage de la douille 46 dans une position de repos représentée en figure 2 sont prévus entre cette douille d'une part et la partie 42 du piston et le plongeur distributeur 28 d'autre part, ces moyens de blocage étant formés d'une épingle ressort 58, par exemple en fil d'acier ou en matière plastique, qui est disposée transversalement et qui est logée en partie dans une gorge annulaire ou fente 60 de la partie 42 du piston du servomoteur, pour être immobilisée axialement dans ce piston.

Cette épingle comprend au moins deux coudes ou deux branches 62 qui sont engagés au moins en partie dans une gorge annulaire ou dans une fente de la douille 46 pour immobiliser celle-ci en translation axiale par rapport au piston du servomoteur, et au moins deux coudes ou deux branches 64 qui s'étendent de part et d'autre du plongeur distributeur 28 et qui sont destinés à coopérer avec une surface tronconique 66 de celui-ci pour être écartés l'un de l'autre et libérer la douille 46 quand le plongeur distributeur 28 est déplacé vers l'avant par rapport au piston 22 du servomoteur.

Plus précisément, la surface tronconique 66 du plongeur distributeur 28 va en s'élargissant vers l'arrière et son déplacement vers l'avant entre les branches ou les coudes 64 de l'épingle 58 a pour effet d'écarter ces deux branches ou ces deux coudes l'un de l'autre et de repousser les coudes ou branches 62 précités radialement vers l'extérieur en dehors de la gorge annulaire de la douille 46 dans laquelle ils étaient engagés. Sous l'action du ressort 52, la douille 46 est alors déplacée vers l'arrière de façon étanche dans le logement 48 du piston 22 et son rebord arrière 54 vient s'appliquer à étanchéité sur le clapet annulaire 56 de la valve 3 voies 30 et repousse ce clapet vers l'arrière, à l'encontre de l'action du ressort de rappel 68 de ce clapet.

Dans ces conditions, le clapet annulaire 56 n'est plus en appui sur la face arrière de la partie 42 du piston, mais la communication entre les chambres 14 et 16 du servomoteur reste fermée en raison de l'appui de la douille 46 sur le clapet annulaire 56. Le bord arrière 70 du plongeur distributeur 28 est davantage écarté du clapet annulaire 56 qui a été repoussé vers l'arrière par la douille 46, ce qui ouvre plus largement la communication entre la chambre de travail 16 du servomoteur et l'atmosphère extérieure.

Le plongeur distributeur 28 est maintenu dans une position initiale de repos par une tige ou un cavalier transversal 72 qui est logé dans deux lumières 74 de faible longueur axiale de la partie 42 du piston et qui s'étend à travers une fente annulaire 76 de la douille 46. Cette tige ou ce cavalier 72 coopère avec le plongeur distributeur 28 pour limiter son déplacement vers l'arrière, l'extrémité arrière de la surface tronconique 66 du plongeur distributeur venant buter sur les branches du cavalier 72, comme représenté en figure 2.

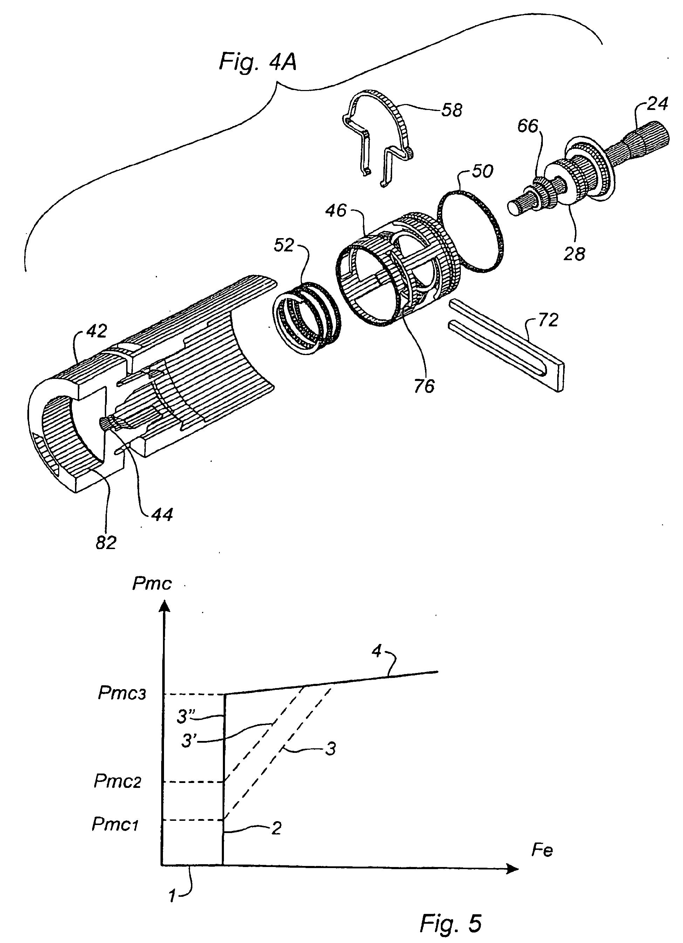

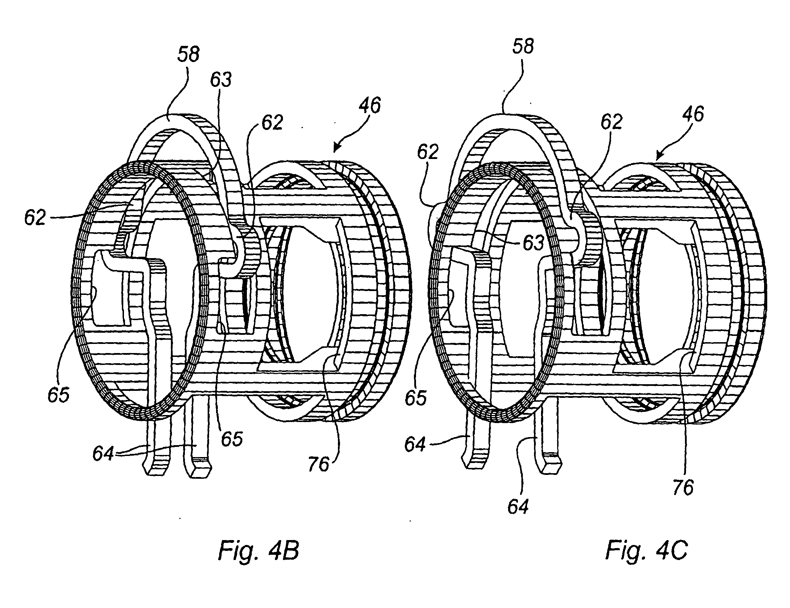

Les structures de la douille 46, de l'épingle ressort 58 et du cavalier 72 sont représentées plus clairement aux figures 4A, 4B et 4C dans lesquelles l'épingle 58 a une forme légèrement différente de celle représentée en figure 2, mais remplit la même fonction et produit les mêmes résultats.

En figure 4B où la position représentée correspond à celle de la figure 2, l'épingle 58 est dans un état de blocage de la douille 46 en position avant et ses coudes 62 sont en appui axial sur un bord avant d'une fente annulaire 63 de la douille 46. Les branches 64 de l'épingle sont relativement proches l'une de l'autre et s'étendent de part et d'autre de l'extrémité cylindrique avant du plongeur distributeur 28.

En figure 4C, les branches 64 de l'épingle ont été écartées par la partie tronconique 66 du distributeur plongeur 28, les coudes 62 ont été écartés et ont échappé au bord avant de la fente 63, la douille 46 a été déplacée axialement vers l'arrière par son ressort de rappel et les branches 64 de l'épingle forment une butée limitant le déplacement vers l'arrière de la douille 46 dont la fente 63 comporte des décrochements axiaux 65 destinés à s'engager sur les branches 64. Le cavalier 72 qui définit la position de repos du plongeur : distributeur 28 et qui est engagé dans une fente annulaire 76 de la douille 46, vient en butée sur le bord avant de la fente 76 pour ramener la douille 46 en position avant où elle est retenue par l'épingle 58, à la fin d'une phase de freinage.

L'extrémité avant du plongeur distributeur 28 est guidée en translation axiale dans l'orifice central 44 de la paroi transversale d'extrémité avant du logement 48, cet orifice central débouchant au voisinage du disque de réaction 40 disposé entre la partie avant du piston 22 et la tige de poussée 34.

Dans l'exemple de réalisation représenté en figure 2, une rondelle 80 est interposée entre le disque de réaction 40 et l'extrémité avant du plongeur distributeur 28 et est axialement déplaçable, sur une course limitée, dans un chambrage 82 de la face d'extrémité avant du piston 22, ce chambrage ayant un diamètre supérieur au diamètre de l'extrémité avant du plongeur distributeur 28.

Le dispositif qui vient d'être décrit fonctionne de la façon suivante :

Dans une position de repos correspondant à une condition de non-freinage, la douille 46 est dans la position représentée en figure 2 par rapport à la partie 42 du piston 22 et son rebord arrière 54 est écarté du clapet annulaire 56 de la valve 3 voies 30. Dans cette position, la douille 46 est bloquée sur le piston 22 par l'épingle ressort 58.

Le clapet annulaire 56 est en appui sur l'extrémité arrière 70 du plongeur distributeur 28 et ferme la communication entre la chambre de travail 16 du servomoteur et l'atmosphère extérieure. Le clapet annulaire 56 est écarté de l'extrémité arrière de la partie 42 du piston, ce qui autorise une communication, d'une façon bien connue, entre la chambre de dépression 14 et la chambre de travail 16 du servomoteur.

Lorsque le conducteur du véhicule appuie sur la pédale de frein, la tige de commande 24 est déplacée vers l'avant, ce qui a pour effet d'appliquer le clapet annulaire 56 sur l'extremité arrière de la partie 42 du piston 22 et d'isoler les chambres 14 et 20 l'une de l'autre, puis d'écarter l'extrémité arrière 70 du plongeur distributeur du clapet annulaire 56, et permet une entrée d'air à pression atmosphérique dans la chambre de travail 16 du servomoteur.

Sous l'effet de la différence de pression qui s'établit entre les deux chambres 14 et 16 du servomoteur, le piston 22 de celui-ci est déplacé vers l'avant et son déplacement est transmis par la tige de poussée 34 au piston primaire du maître-cylindre pour accroître la pression du liquide de frein dans le circuit de freinage du véhicule.

Une condition d'équilibre est trouvée quand le clapet annulaire 56 de la valve 3 voies 30 est à nouveau en appui sur l'extrémité arrière du plongeur distributeur 28, comme représenté en figure 2. Le disque de réaction 40 est comprimé sur le piston 22 par la tige de poussée 34 et est appliqué, par l'intermédiaire de la rondelle 80 dans l'exemple de réalisation de la figure 2, sur l'extrémité avant du plongeur distributeur 28, qui transmet la réaction du circuit de freinage à la tige de commande 24 et à la pédale de frein. Cette réaction est ressentie par le conducteur qui peut ainsi moduler l'effort qu'il applique à la pédale de frein en fonction du freinage à effectuer.

Dans un freinage normal, la vitesse de déplacement vers l'avant de la tige de commande 24 est telle que le plongeur distributeur 28 n'est pas déplacé vers l'avant plus vite que le piston 22 du servomoteur. La douille 46 reste alors immobilisée en déplacement axial dans le piston 22 par l'épingle 58 et ne joue aucun rôle dans le freinage.

Par contre, lors d'un freinage d'urgence, la tige de commande 24 déplace le plongeur distributeur vers l'avant plus vite que le piston 22 n'est lui-même déplacé vers l'avant par la montée en pression dans la chambre de travail 16, et la surface tronconique 66 du plongeur distributeur 28 vient écarter l'une de l'autre les branches 64 de l'épingle 58. Toutefois, la douille 46 reste bloquée sur la partie 42 du piston 22 par le cavalier 72, tant que le piston n'a pas lui-même parcouru une certaine distance vers l'avant, ce qui permet au cavalier 72 de venir en butée sur l'extrémité arrière des lumières 74.

La douille 46 qui a été libérée par l'épingle ressort 58, est repoussée vers l'arrière par le ressort 52 et son rebord arrière 54 vient s'appliquer à étanchéité sur le clapet annulaire 56 de la valve 3 voies et repousse ce clapet vers l'arrière. Cela augmente l'intervalle entre l'extrémité arrière 70 du plongeur distributeur 28 et le clapet annulaire 56 et augmente donc l'ouverture du passage faisant communiquer la chambre de travail 16 du servomoteur avec l'atmosphère environnante, et le plongeur distributeur 28 doit reculer pour revenir dans une position d'équilibre en appui sur le clapet annulaire 56. Si alors le conducteur appuie à nouveau sur la pédale de frein pour un freinage d'urgence, le plongeur distributeur 28 doit parcourir une plus grande distance vers l'avant par rapport au piston 22 avant que son extrémité avant ne vienne s'appliquer sur le disque de réaction 40, ce qui correspond à la fin de la phase de saut.

Cette phase est donc allongée, comme représenté en figure 5, la pression en sortie du maître-cylindre ayant alors la valeur Pmc2.

Dans ce freinage d'urgence, le conducteur continue à appliquer un effort à la pédale de frein, et la pression en sortie du maître-cylindre suit la courbe 3' de la figure 5, jusqu'à la phase de saturation ou phase 4.

Cet allongement de la phase de saut permet de moduler l'assistance fournie par le servomoteur 10 en fonction de la vitesse de déplacement de la tige de commande 24, et donc du caractère d'urgence du freinage.

Le déplacement vers l'arrière de la douille 46 par le ressort 52, dans le logement 48 du piston du servomoteur, est limité par butée sur les branches 64 de l'épingle 58, celle-ci étant elle-même maintenue dans une rainure annulaire 60 de la partie 42 du piston.

Quand le conducteur cesse d'appuyer sur la pédale de frein, la tige de commande 24 et le plongeur distributeur 28 sont déplacés vers l'arrière par le ressort de rappel 84 de la tige de commande 24, l'extrémité arrière 70 du plongeur distributeur s'applique sur le clapet annulaire 56 de la valve 3 voies et ferme le passage d'admission d'air à pression atmosphérique dans la chambre de travail 16 du servomoteur, en repoussant également ce clapet vers l'arrière, ce qui a pour effet de rétablir une communication entre la chambre de dépression 14 et la chambre de travail 16 du servomoteur.

Le piston 22 du servomoteur est déplacé vers l'arrière par son ressort de rappel 36 et revient en butée sur le couvercle du servomoteur. Le cavalier 72 est alors redéplacé vers l'avant dans les lumières 74 de la partie 42 du piston 22, par butée sur le couvercle du servomoteur, et revient dans la position représentée en figure 2. Dans cette position, le cavalier 72 définit une position de repos du plongeur distributeur 28, la face arrière de sa partie tronconique 66 étant en appui sur le cavalier 72. Par son déplacement vers l'avant dans les lumières 74 de la partie 42 du piston, le cavalier 72 a également ramené vers l'avant la douille 46 qui retrouve la position avant représentée en figure 2, dans laquelle elle est à nouveau bloquée par les bras ou les coudes 62 de l'épingle 58.

La rondelle plate 80 interposée avec jeu entre l'extrémité avant du plongeur distributeur 28 et le disque de réaction 40 a la fonction suivante : quand le conducteur relâche la pédale de frein après un freinage, la rondelle 80 est poussée vers l'arrière par le disque de réaction 40 et vient s'appliquer sur le fond du chambrage 82 formé dans la face avant du piston 22. Dans cette position, la réaction du circuit de freinage n'est plus transmise au plongeur distributeur 28 et à la tige de commande 24 mais au piston 22. Si le conducteur doit alors freiner à nouveau, le déplacement vers l'avant de la tige de commande 24 et du plongeur distributeur 28 n'est pas contrarié par l'effort de réaction du circuit de freinage, au moins tant que l'extrémité avant du plongeur distributeur 28 n'a pas réappliqué la rondelle 80 sur le disque de réaction 40, ce qui facilite ce freinage complémentaire.

Dans ce cas, la phase de saut 2 est augmentée jusqu'à la phase de saturation et se termine en Pmc3 comme représenté en trait plein en 3" en figure 5.

Dans le servomoteur selon l'invention, les pièces permettant l'allongement de la phase de saut en cas de freinage d'urgence et la modulation de l'assistance au freinage par le servomoteur sont des pièces simples et économiques qui ne subissent pas d'efforts importants. Pour fixer les idées, on indiquera, à titre d'exemple uniquement, que la course de la douille 46 est d'environ 1 à 2 mm au maximum et que la vitesse de déplacement de la tige de commande 24 vers l'avant doit être d'au moins 100 mm par seconde pour déclencher le déblocage de la douille 46 par l'épingle 58.

Les variantes de réalisation des figures 6 et 8 diffèrent de la réalisation des figures 2 à 4 par le type de rondelle interposée entre le disque de réaction 40 et l'extrémité avant du plongeur distributeur 28.

En figure 6, l'extrémité avant du plongeur distributeur 28 est en appui sur une rondelle 86 ayant un diamètre inférieur à celui du chambrage 82, cette rondelle étant guidée en translation axiale dans une bague 88 elle-même guidée en translation axiale dans le chambrage 82 et ayant une longueur axiale supérieure à celle de la rondelle 86. L'extrémité avant de la bague comporte un rebord radial 90 de retenue de la rondelle 86, dont l'extrémité arrière est formée avec un rebord radial 92 coopérant avec le rebord 90 de la bague 88. Le jeu axial de la bague 88 dans le chambrage 82 est inférieur au recul possible de la douille 46 dans le logement 48.

En fonctionnement lors d'un freinage d'urgence, et comme représenté par la courbe 6 en figure 7, la disposition de la figure 6 permet un allongement de la phase de saut et une modification du rapport d'assistance, celle-ci étant déterminée par le diamètre de la rondelle 86.

En figure 8, la rondelle 94 est guidée en translation dans le chambrage 82, comme la rondelle 80 du premier mode de réalisation décrit, mais sa face arrière comporte une queue cylindrique axiale 96 qui vient en appui sur l'extrémité avant du plongeur distributeur 28 et qui a un diamètre inférieur à celui du passage axial 44 de la partie 42 du piston dans lequel est guidée l'extrémité avant du plongeur distributeur 28.

Avec cette disposition, le plongeur distributeur vient en butée sur la queue 96 de la rondelle 94 lors d'un freinage d'urgence et cette queue 96 reste en appui sur le plongeur distributeur 28 lors du recul de celui-ci à la suite du recul de la douille 46. On conserve donc une réaction sur le plongeur distributeur et le rapport d'assistance n'est pas modifié lors d'un freinage d'urgence avec augmentation du saut, comme représenté en figure 9 par la courbe 8.

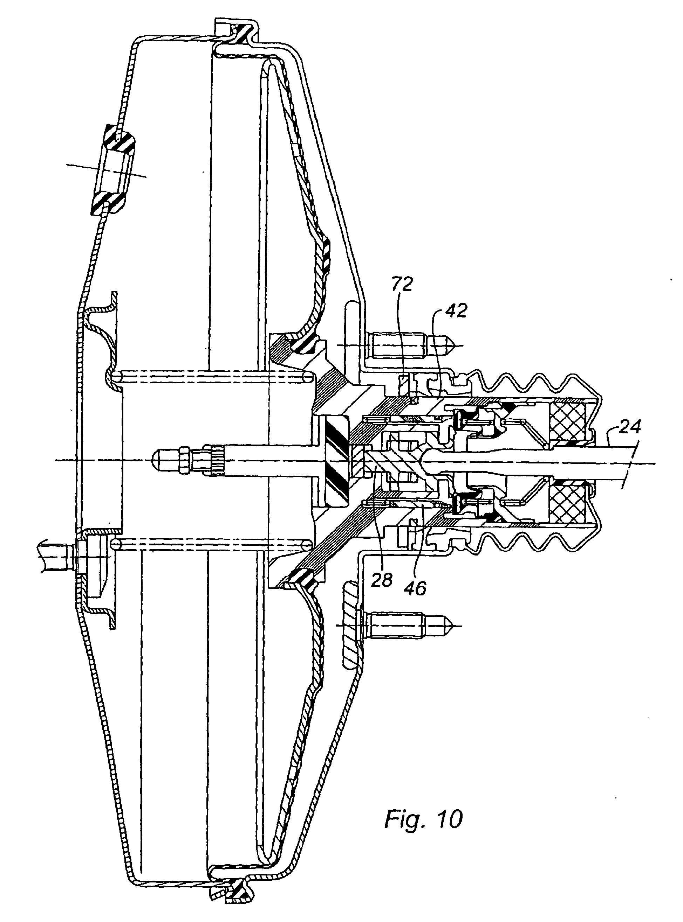

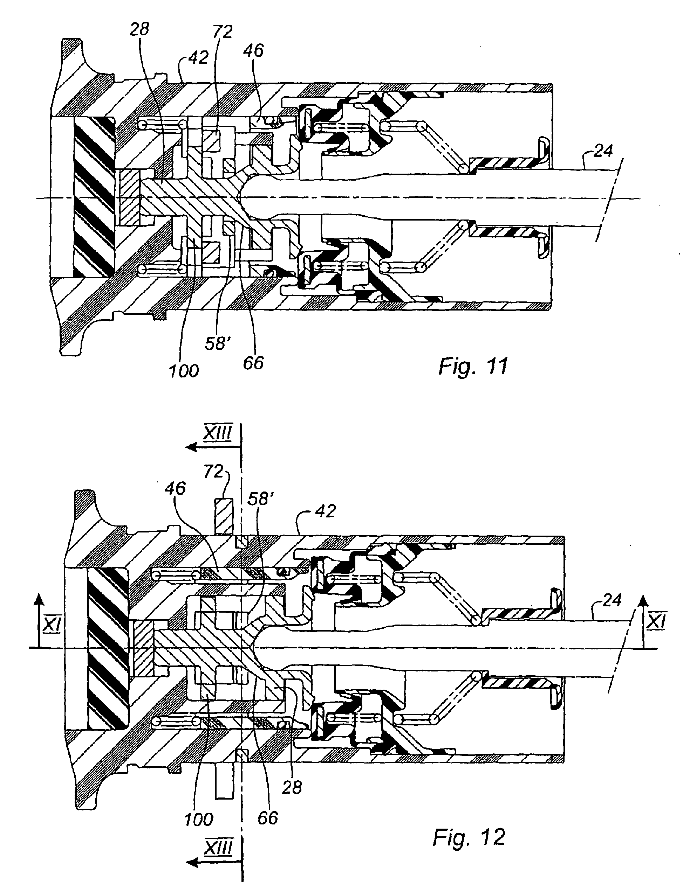

Dans la variante de réalisation des figures 10 à 13, le cavalier 72 est sensiblement dans le même plan transversal que l'épingle ressort 58' qui maintient la douille 46 en position avant. Cela permet de diminuer la longueur du corps 42 du piston, de la douille 46 et du plongeur distributeur 28, et donc de réduire l'encombrement axial.

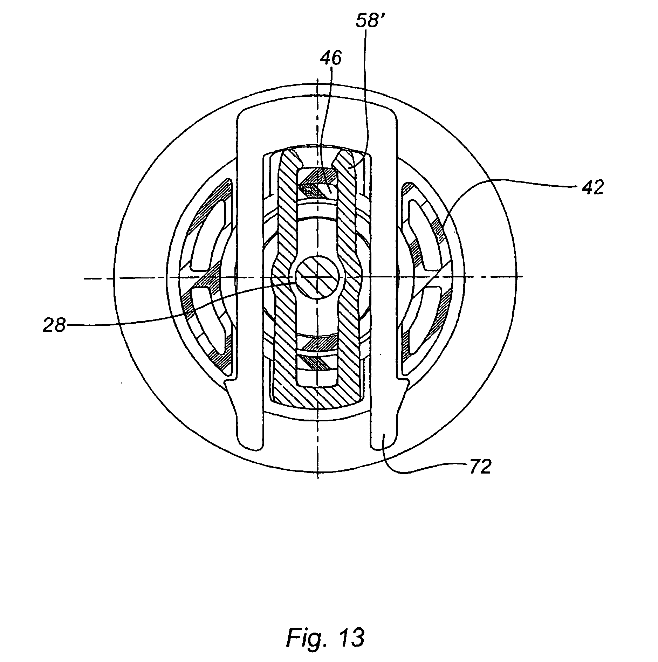

Dans cette variante, le cavalier 72 et l'épingle 58' sont en forme de U et sont montés par translation transversale dans des fentes transversales du corps 42 du piston et de la douille 46 (fig. 13) et par encliquetage élastique sur le corps 42 du piston. Le plongeur distributeur 28 comporte une collerette, annulaire 100 d'appui sur le cavalier 72 en position de repos.

Pour le reste, les moyens de cette variante de réalisation sont les mêmes que ceux déjà décrits en référence aux figures précédentes, et son fonctionnement est identique à celui décrit.

## Revendications

1. Servomoteur pneumatique d'assistance au freinage, en particulier pour véhicule automobile, comprenant un piston (22) monté entre une tige de commande (24) et une tige de poussée (34), la tige de commande se terminant par un plongeur distributeur (28) guidé en translation dans un logement (48) du piston, et une valve 3 voies (30) montée dans le piston (22) autour de la tige de commande (24) et comprenant un clapet (56) coopérant avec un siège du piston (22) et avec un siège (70) du plongeur distributeur (28), une douille cylindrique (46) montée axialement coulissante dans ledit logement (48) autour du plongeur distributeur (28), et des moyens (52) sollicitant élastiquement en permanence la douille (46) vers le clapet (56) de la valve 3 voies pour écarter ce clapet de son siège (70) sur le plongeur distributeur (28) et augmenter ainsi l'alimentation en air atmosphérique d'une chambre de travail (16) du servomoteur, des moyens (58, 58') de blocage axial de la douille (46) dans une position écartée du clapet (56), et des moyens (66) de déblocage de la douille, qui sont sensibles à la vitesse de déplacement de la tige de commande (24) et du plongeur distributeur (28) dans le sens du freinage et qui débloquent la douille (46) quand cette vitesse est au moins égale à une valeur prédéterminée, **caractérisé en ce que** les moyens de blocage axial de la douille (46) sont agencés dans le logement (48) du piston entre le plongeur distributeur (28) et le piston et comprennent un élément élastiquement déformable (58, 58') de retenue de la douille (46), cet élément étant monté dans une gorge ou fente annulaire du corps (42) du piston (22) .

2. Servomoteur selon la revendication 1, **caractérisé en ce qu'**une partie (64) de l'élément de retenue (58) s'appuie sur une rampe ou surface oblique (66) du plongeur distributeur (28), pour être écartée de ce dernier et libérer la douille (46) quand le plongeur distributeur (28) est déplacé axialement vers la tige de poussée (34) par rapport au piston (22).

3. Servomoteur selon la revendication 1 ou 2, **caractérisé en ce que** l'élément de retenue (58) est formé d'une épingle en fil d'acier à ressort, comprenant au moins un coude logé dans ladite gorge du logement (48) du piston et au moins un coude (62) logé dans une encoche ou fente de la douille (46).

4. Servomoteur selon la revendication 3, **caractérisé en ce que** l'élément de retenue (58) comprend au moins deux coudes (62) opposés logés dans des encoches ou des fentes de la douille (46).

5. Servomoteur selon l'une des revendications précédentes, **caractérisé en ce que** la douille (46) est axialement coulissante de façon étanche dans le logement (48) du piston (22).

6. Servomoteur selon l'une des revendications précédentes, **caractérisé en ce que** le rebord d'extrémité (54) de la douille destiné à s'appliquer sur le clapet (56), forme un siège d'étanchéité du clapet.

7. Servomoteur selon l'une des revendications 1 à 6, **caractérisé en ce que** l'élément de retenue (58) limite le déplacement axial de la douille (46) vers le clapet (56) de la valve 3 voies.

8. Servomoteur selon l'une des revendications 1 à 7, **caractérisé en ce qu'**il comprend des moyens (72) portés par le piston (22) pour limiter le déplacement axial du plongeur distributeur (28) par rapport au piston (22) vers le clapet (56) de la valve 3 voies et pour définir une position de repos du plongeur distributeur (28).

9. Servomoteur selon la revendication 8, **caractérisé en ce que** lesdits moyens de limitation de déplacement comprennent une tige ou un cavalier (72) engagé dans des lumières (74, 76) des parois cylindriques du piston (22) et de la douille (46) et sont axialement déplaçables sur une course limitée par rapport au piston (22).

10. Servomoteur selon la revendication 8 ou 9, **caractérisé en ce que** lesdits moyens (72) de limitation de déplacement forment également des moyens de retour de la douille (46) dans une position de blocage axial dans le logement (48) du piston, où la douille (46) est écartée du clapet annulaire (56) de la valve 3 voies.

11. Servomoteur selon l'une des revendications 8 à 10, **caractérisé en ce que** les moyens (72) de limitation du déplacement et de définition d'une position de repos du plongeur distributeur (28) sont sensiblement dans le même plan transversal que les moyens (58') de blocage axial de la douille (46).

12. Servomoteur selon la revendication 11, **caractérisé en ce que** les moyens (72) de limitation de déplacement et de définition d'une position de repos du plongeur distributeur (28)et les moyens (58') de blocage axial de la douille (46) sont montés par encliquetage élastique sur le corps (42) du piston.

13. Servomoteur selon l'une des revendications précédentes, **caractérisé en ce qu'**une rondelle (80, 86, 94) est interposée avec un jeu axial entre l'extrémité du plongeur distributeur (28) et un disque de réaction (40) monté entre le piston (22) et la tige de poussée (34), cette rondelle (80, 86, 94) étant logée dans un chambrage (82) de l'extrémité du piston (22) et venant s'appliquer sur le fond de ce chambrage pour la transmission d'un effort de réaction pendant le retour du plongeur distributeur (28) dans une position de repos ou position de non-freinage.

14. Servomoteur selon la revendication 13, **caractérisé en ce que** la rondelle (80) est une rondelle plate et transmet un effort de réaction au piston (22).

15. Servomoteur selon la revendication 13, **caractérisé en ce que** la rondelle (86) est guidée en translation axiale dans une bague (88) guidée en translation axiale dans le chambrage (82), la bague ayant une longueur axiale supérieure à celle de la rondelle, et la rondelle (86) transmet un effort de réaction au plongeur distributeur (28).

16. Servomoteur selon la revendication 13, **caractérisé en ce que** la rondelle (94) comporte une queue cylindrique axiale (96) qui transmet un effort de réaction au plongeur distributeur (28).

## Patentansprüche

1. Pneumatischer Servomotor zur Bremsunterstützung, insbesondere für ein Kraftfahrzeug, mit einem Kolben (22), der zwischen einer Steuerstange (24) und einer Schubstange (34) angebracht ist, wobei die Steuerstange in einen Verteilertauchkolben (28) endet, der in einer Aufnahme (48) des Kolbens translatorisch geführt ist, und einem Dreiwegeventil (30), das im Kolben (22) um die Steuerstange (24) angebracht ist und ein Ventilelement (56) aufweist, das mit einem Sitz des Kolbens (22) und mit einem Sitz (70) des Verteilertauchkolbens (28) zusammenwirkt, mit einer zylindrischen Hülse (46), die in der Aufnahme (48) um den Verteilertauchkolben (28) axial gleitend angebracht ist, und mit Mitteln (52), die die Hülse (46) kontinuierlich elastisch zum Ventilelement (56) des Dreiwegeventils so beaufschlagen, dass dieses Ventilelement von seinem Sitz (70) am Verteilerkolben (28) entfernt und somit die Versorgung einer Arbeitskammer (16) des Servomotors mit atmosphärischer Luft erhöht wird, mit Mitteln (58, 58') zur axialen Blockierung der Hülse (46) in einer von dem Ventilelement (56) beabstandeten Stellung, und mit Mitteln (66) zur Freigabe der Hülse, die auf die Verlagerungsgeschwindigkeit der Steuerstange (24) und des Verteilertauchkolbens (28) in Bremsrichtung ansprechen und die Hülse (46) freigeben, wenn diese Geschwindigkeit mindestens einem vorbestimmten Wert entspricht, **dadurch gekennzeichnet, dass** die Mittel zur axialen Blockierung der Hülse (46) in der Aufnahme (48) des Kolbens zwischen dem Verteilertauchkolben (28) und dem Kolben angeordnet sind und ein elastisch verformbares Element (58, 58') zum Zurückhalten der Hülse (46) aufweisen, wobei dieses Element in einer Nut oder in einem ringförmigen Spalt des Körpers (42) des Kolbens (22) angebracht ist.

2. Servomotor nach Anspruch 1, **dadurch gekennzeichnet, dass** ein Teil (64) des Rückhalteelements (58) an einer Rampe oder an einer schrägen Oberfläche (66) des Verteilertauchkolbens (28) anliegt, um von diesem entfernt zu werden und die Hülse (46) freizugeben, wenn der Verteilertauchkolben (28) in Bezug auf den Kolben (22) axial zur Schubstange (34) hin verlagert wird.

3. Servomotor nach Anspruch 1 oder 2, **dadurch gekennzeichnet, dass** das Rückhalteelement (58) aus einer Klammer aus Federstahldraht gebildet ist, die mindestens eine Biegung aufweist, die in der Nut der Aufnahme (48) des Kolbens aufgenommen ist, und mindestens eine Biegung (62), die in einer Einkerbung oder in einem Spalt der Hülse (46) aufgenommen ist.

4. Servomotor nach Anspruch 3, **dadurch gekennzeichnet, dass** das Rückhalteelement (58) mindestens zwei entgegengesetzte Biegungen (62) aufweist, die in Einkerbungen oder in Spalten der Hülse (46) aufgenommen sind.

5. Servomotor nach einem der vorhergehenden Ansprüche, **dadurch gekennzeichnet, dass** die Hülse (46) in der Aufnahme (48) des Kolbens (22) in dichter Weise axial gleitend ist.

6. Servomotor nach einem der vorhergehenden Ansprüche, **dadurch gekennzeichnet, dass** der Endrand (54) der Hülse, der an das Ventilelement (56) in Anlage gelangen soll, einen Dichtsitz des Ventilelements bildet.

7. Servomotor nach einem der Ansprüche 1 bis 6, **dadurch gekennzeichnet, dass** das Rückhalteelement (58) die axiale Verlagerung der Hülse (46) zum Ventilelement (56) des Dreiwegeventils begrenzt.

8. Servomotor nach einem der Ansprüche 1 bis 7, **dadurch gekennzeichnet, dass** er von dem Kolben (22) getragene Mittel (72) aufweist, die die axiale Verlagerung des Verteilertauchkolbens (28) in Bezug auf den Kolben (22) zum Ventilelement (56) des Dreiwegeventils hin begrenzen und eine Ruhestellung des Verteilertauchkolbens (28) definieren.

9. Servomotor nach Anspruch 8, **dadurch gekennzeichnet, dass** die Mittel zur Verlagerungsbegrenzung einen Stift oder eine Krampe (72) aufweisen, die in Langlöcher (74, 76) der zylindrischen Wände des Kolbens (22) und der Hülse (46) eingreift, und in Bezug auf den Kolben (22) über einen begrenzten Weg axial verlagert werden können.

10. Servomotor nach Anspruch 8 oder 9, **dadurch gekennzeichnet, dass** die Mittel (72) zur Verlagerungsbegrenzung auch Mittel zum Zurückstellen der Hülse (46) in eine Stellung zur axialen Blockierung in der Aufnahme (48) des Kolbens bilden, in der die Hülse (46) von dem ringförmigen Ventilelement (56) des Dreiwegeventils entfernt ist.

11. Servomotor nach einem der Ansprüche 8 bis 10, **dadurch gekennzeichnet, dass** die Mittel (72) zur Verlagerungsbegrenzung und zur Definition einer Ruhestellung des Verteilertauchkolbens (28) im Wesentlichen in der gleichen Querebene liegen wie die Mittel (58') zur axialen Blockierung der Hülse (46).

12. Servomotor nach Anspruch 11, **dadurch gekennzeichnet, dass** die Mittel (72) zur Verlagerungsbegrenzung und zur Definition einer Ruhestellung des Verteilertauchkolbens (28) und die Mittel (58') zur axialen Blockierung der Hülse (46) durch elastisches Einrasten am Körper (42) des Kolbens angebracht sind.

13. Servomotor nach einem der vorhergehenden Ansprüche, **dadurch gekennzeichnet, dass** zwischen dem Ende des Verteilertauchkolbens (28) und einer zwischen dem Kolben (22) und der Schubstange (34) angebrachten Reaktionsscheibe (40) eine kleine Scheibe (80, 86, 94) mit axialem Spiel angeordnet ist, wobei diese kleine Scheibe (80, 86, 94) in einer Einsenkung (82) des Endes des Kolbens (22) aufgenommen ist und an den Boden dieser Einsenkung in Anlage gelangt, um während des Zurückstellens des Verteilertauchkolbens (28) in eine Ruhestellung oder in eine Stellung, in der keine Bremsung stattfindet, eine Reaktionskraft zu übertragen.

14. Servomotor nach Anspruch 13, **dadurch gekennzeichnet, dass** die kleine Scheibe (80) eine flache kleine Scheibe ist und dem Kolben (22) eine Reaktionskraft überträgt.

15. Servomotor nach Anspruch 13, **dadurch gekennzeichnet, dass** die kleine Scheibe (86) in einem Ring (88) in eine axiale Translationsbewegung geführt ist, wobei der Ring in der Einsenkung (82) in eine axiale Translationsbewegung geführt ist und eine axiale Länge aufweist, die größer ist als die der kleinen Scheibe, und die kleine Scheibe (86) überträgt dem Verteilertauchkolben (28) eine Reaktionskraft.

16. Servomotor nach Anspruch 13, **dadurch gekennzeichnet, dass** die kleine Scheibe (94) ein zylindrisches, axiales Endstück (96) aufweist, das dem Verteilertauchkolben (28) eine Reaktionskraft überträgt.

## Claims

1. Pneumatic brake booster, in particular for a motor vehicle, comprising a piston (22) mounted between a control rod (24) and a push rod (34), the control rod being terminated by a distributor plunger (28) guided translationally in a housing (48) of the piston, and a three-way valve (30) mounted in the piston (22) around the control rod (24) and comprising a shutter (56) engaging with a seat of the piston (22) and with a seat (70) of the distributor plunger (28), a cylindrical sleeve (46) mounted in an axially sliding manner in said housing (48) around the distributor plunger (28), and means (52) which permanently urge the sleeve (46) elastically toward the shutter (56) of the three-way valve in order to move this shutter away from its seat (70) on the distributor plunger (28) and thus to increase the supply of atmospheric air to a working chamber (16) of the booster, means (58, 58') for axially locking the sleeve (46) when the shutter (56) is in a moved-away position, and means (66) for unlocking the sleeve which are sensitive to the speed of movement of the control rod (24) and of the distributor plunger (28) in the direction of braking and which unlock the sleeve (46) when this speed is at least equal to a predetermined value, **characterized in that** the means for axially locking the sleeve (46) are arranged in the housing (48) of the piston between the distributor plunger (28) and the piston and comprise an elastically deformable element (58, 58') for retaining the sleeve (46), this element being mounted in an annular groove or slot in the body (42) of the piston (22).

2. Booster according to Claim 1, **characterized in that** a part (64) of the retaining element (58) bears on a ramp or oblique surface (66) of the distributor plunger (28) so that it can be moved away from said plunger and release the sleeve (46) when the distributor plunger (28) is moved axially toward the push rod (34) with respect to the piston (22).

3. Booster according to Claim 1 or 2, **characterized in that** the retaining element (58) is formed by a spring steel wire stirrup comprising at least one kink housed in said groove in the housing (48) of the piston and at least one kink (62) housed in a notch or slot in the sleeve (46).

4. Booster according to Claim 3, **characterized in that** the retaining element (58) comprises at least two opposed kinks (62) housed in notches or slots in the sleeve (46).

5. Booster according to one of the preceding claims, **characterized in that** the sleeve (46) is able to slide axially in a sealed manner in the housing (48) of the piston (22).

6. Booster according to one of the preceding claims, **characterized in that** the sleeve end rim (54) intended to be applied against the shutter (56) forms a sealing seat for the shutter.

7. Booster according to one of Claims 1 to 6, **characterized in that** the retaining element (58) limits the axial movement of the sleeve (46) toward the shutter (56) of the three-way valve.

8. Booster according to one of Claims 1 to 7, **characterized in that** it comprises means (72) borne by the piston (22) to limit the axial movement of the distributor plunger (28) with respect to the piston (22) toward the shutter (56) of the three-way valve and to define a rest position for the distributor plunger (28).

9. Booster according to Claim 8, **characterized in that** said movement-limiting means comprise a rod or a clip (72) engaged in openings (74, 76) in the cylindrical walls of the piston (22) and in the sleeve (46) and are able to move axially over a limited travel with respect to the piston (22).

10. Booster according to Claim 8 or 9, **characterized in that** said movement-limiting means (72) also form means for returning the sleeve (46) to an axial-locking position in the housing (48) of the piston, in which the sleeve (46) is moved away from the annular shutter (56) of the three-way valve.

11. Booster according to one of Claims 8 to 10, **characterized in that** the means (72) for limiting the movement and for defining a rest position for the distributor plunger (28) are substantially in the same transverse plane as the means (58') for axially locking the sleeve (46).

12. Booster according to Claim 11, **characterized in that** the means (72) for limiting movement and for defining a rest position for the distributor plunger (28) and the means (58') for axially locking the sleeve (46) are mounted by elastic snap-fastening on the body (42) of the piston.

13. Booster according to one of the preceding claims, **characterized in that** a washer (80, 86, 94) is interposed with an axial clearance between the end of the distributor plunger (28) and a reaction disk (40) mounted between the piston (22) and the push rod (34), this washer (80, 86, 94) being housed in a recess (82) in the end of the piston (22) and being applied against the bottom of this recess in order to transmit a reaction force while the distributor plunger (28) is returning to a rest position or non-braking position.

14. Booster according to Claim 13, **characterized in that** the washer (80) is a flat washer and transmits a reaction force to the piston (22).

15. Booster according to Claim 13, **characterized in that** the washer (86) is guided in axial translation in a ring (88) guided in axial translation in the recess (82), the ring having an axial length which is greater than that of the washer, and the washer (86) transmits a reaction force to the distributor plunger (28).

16. Booster according to Claim 13, **characterized in that** the washer (94) comprises an axial cylindrical tail (96) which transmits a reaction force to the distributor plunger (28).
